# FASCICULE DE BREVET EUROPEEN

(11) **EP 0 425 356 B1**
(45) Date de publication et mention de la délivrance du brevet: **27.04.1994**
(21) Numéro de dépôt: 90402963.4
(22) Date de dépôt: 22.10.1990
(51) Int. Cl.: G01S 7/52, G01S 7/295, G01S 7/06

(54) **Procédé et dispositif pour la reconnaissance d'une cible**
Verfahren und Vorrichtung zur Zielerkennung
Method and apparatus for the recognition of a target

(30) Priorité: 24.10.1989 FR 8913928
(43) Date de publication de la demande: 02.05.1991
(73) Titulaire: AEROSPATIALE Société Nationale Industrielle, 75781 Paris Cédex 16 (FR)
(72) Inventeur: Appriou, Alain, F-91400 Saclay (FR); Barthélémy, Régis, F-91940 Les Ulis (FR); Coulombeix, Colette, F-92290 Chatenay Malabry (FR)
(74) Mandataire: Bonnetat, Christian

(56) Documents cités:
- EP-A- 0 235 946
- FR-A- 2 593 608
- US-A- 4 462 081
- Proceedings of the 1988 IEEE National Radar Conference 20 avril 1988, pages 157 - 164; V.C.Vannicola et al: "Applications of knowledge based systems to surveillance"

## Description

La présente invention concerne un procédé et un dispositif pour reconnaître une cible parmi une pluralité de cibles connues.

On connaît déjà un tel procédé. Dans ce procédé connu, au moyen d'un capteur approprié, par exemple un radar, ou par reconstitution à partir de maquettes ou de plans, on détermine la valeur d'un critère (par exemple signature radar) pour chacune des cibles connues de ladite pluralité de cibles. Les signaux ainsi obtenus sont soumis à un traitement de mise en forme, puis sont stockés dans une mémoire pour constituer une banque de données. Après cette étape préparatoire, il est possible de passer à l'étape de reconnaissance. Dans cette étape de reconnaissance, le capteur recueille les signaux provenant de la cible à reconnaître. Ces signaux, après un prétraitement, sont comparés avec ceux contenus dans ladite banque de données et la reconnaissance de la cible est donnée par le résultat de la comparaison. Un tel procédé est connu par exemple du brevet EP-A- 2 593 608.

A cause des imperfections des capteurs utilisés, de la méthode de traitement, des conditions de l'observation de la cible en cours de reconnaissance par le capteur, etc ..., la probabilité de reconnaître l'une des cibles de la pluralité au cours de l'étape de reconnaissance reste limitée.

L'objet de la présente invention est de remédier à cet inconvénient et de permettre d'améliorer substantiellement cette probabilité de reconnaissance.

A cette fin, selon l'invention, le procédé pour reconnaître une cible (T) parmi une pluralité de n cibles connues Ti (avec i = 1, 2, 3, ..., n), est remarquable en ce que :
- dans une première étape préparatoire, pour chacune desdites cibles connues (Ti), on détermine des premières valeurs (Cki) représentatives d'une pluralité de p critères de reconnaissance Ck (avec k = 1, 2, 3, ..., p) ;
- dans une seconde étape préparatoire, on établit par examen direct desdites n cibles connues (Ti), à l'aide desdites premières valeurs (Cki) et pour chaque critère de reconnaissance (Ck), au moins n secondes valeurs (PCk(Ti)) représentatives des probabilités pour qu'une cible (Ti) soit reconnue lorsqu'elle est examinée ; et
- dans une étape de reconnaissance de ladite cible :
   . on établit, par examen direct de ladite cible (T) à reconnaître et à partir desdites premières valeurs (Cki) déterminées par ladite première étape préparatoire, au moins p troisièmes valeurs (pCk(Ti)) représentatives des probabilités pour que, pour chaque critère de reconnaissance (Ck), la cible (T) à reconnaître soit chacune desdites cibles connues (Ti) ;
   . on fusionne entre elles lesdites troisièmes valeurs associées à une même cible connue (Ti) en prenant en compte lesdites secondes valeurs, de façon à obtenir n quatrièmes valeurs (p(Ti)), dont chacune d'elles est représentative de la probabilité que la cible à reconnaître est l'une des cibles connues (Ti) ; et
   . on détermine l'identité de la cible à reconnaître (T) à partir de la plus grande desdites quatrièmes valeurs.

Ainsi, dans la présente invention, on utilise une pluralité de critères et non pas, comme la technique antérieure rappelée ci-dessus, un critère unique. Cette pluralité de critères, qui correspond à des grandeurs complémentaires, est fusionnée mathématiquement de façon que la fusion garantisse l'associativité, la commutativité, la transitivité et la propriété d'ordre total. Grâce à l'utilisation d'une pluralité de critères fusionnés, la probabilité de reconnaissance se trouve améliorée de façon substantielle. Elle est d'autant plus grande que le nombre de critères fusionnés est plus grand, dans la mesure où ceux-ci présentent une bonne complémentarité de discrimination. Comme on le verra ci-après, chacun des critères utilisé peut être du type de ceux définissant la forme, la polarisation, etc ..., de la réponse d'une cible observée.

Les lois de fusion mises en oeuvre pour la fusion desdits critères peuvent être diverses. Toutefois, de préférence, on utilise celles données par l'inférence de BAYES, par le maximum d'entropie, par la théorie de l'évidence ou par la théorie des ensembles flous.

On donne ci-après une liste bibliographique d'ouvrages dans lesquels sont décrites ces théories.
[1] A. APPRIOU
   "Intérêt des théories de l'incertain en fusion de données"
   Colloque international sur le Radar Paris, 24-28 avril 1989
[2] A. APPRIOU
   "Procédure d'aide à la décision multi-informateurs. Applications à la classification multi-capteurs de cibles"
   Symposium de l'Avionics Panel (AGARD) Turquie, 25-29 avril 1988
[3] K.J. ARROW
   "Social choice and individual valves"
   John Wiley and Sons Inc - 1963
[4] D. BLAIR, R. POLLAK
   "La logique du choix collectif"
   Pour la Science - 1983
[5] A. SCHARLIC
   "Décider sur plusieurs critères.
   Panorama de l'aide à la décision multicritère"
   Presses Polytechniques Romandes - 1985
[6] R.L. KEENEY, B. RAIFFA
   "Décisions with multiple objectives :
   Preferences and value tradeoffs"
   John Wiley and Sons - New York - 1976
[7] R.J. JEFFREY
   "The logic of decision"
   The university of Chicago Press, Ltd. - London - 1983 (2nd Edi.)
[8] B. ROY
   "Classements et choix en présence de points de vue multiples"
   R.I.R.O - 2ème année - n° 8 - 1968 - p.p. 57-75
[9] B. ROY
   "Electre III : un algorithme de classements fondé sur une représentation floue des préférences en présence de critères multiples"
   Cahiers du CERO - Vol. 20 - n° 1 - 1978 - p.p. 3-24
[10] R.O. DUDA, P.E. HART, M.J. NILSSON
   "Subjective Bayesian methods for rule-based inference systems"
   Technical Note 124 - Artificial Intelligence Center - SRI International
[11] R.K. BHATNAGAR, L.N. KAMAL
   "Handling uncertain information : a review of numeric and non-numeric methods"
   Uncertainty in Artificial Intelligence - L.N. KAMAL and J.F. LEMMER (editors) - 1986
[12] A.P. DEMPSTER
   "Upper and lower probabilities induced by a multivalued mapping"
   Annals of mathematical Statistics - n° 38 - 1967
[13] A.P. DEMPSTER
   "A generalization of Bayesian inference"
   Journal of the Royal Statistical Society - Vol. 30 - Serie B - 1968
[14] G. SHAFER
   "A mathematical theory of evidence"
   Princeton University Press - Princeton - New Jersey - 1976
[15] D. DUBOIS, N. PRADE
   "Combination of uncertainty with belief functions : a reexamination"
   Proceedings 9th International Joint Conference on Artificial Intelligence - Los Angeles - 1985
[16] H.E. KYBURG
   "Bayesian and non Bayesian evidential updating"
   Artificial Intelligence - 31 - 1987 - p.p. 271-293
[17] P.V. FUA
   "Using probability density functions in the framework of evidential reasoning Uncertainty in knowledge based systems"
   B. BOUCHON, R.R. YAGER, eds. Springer Verlag - 1987
[18] J.J. CHAO, E. DRAKOPOULOS, C.C. LEE
   "An evidential reasoning approach to distributed multiple hypothesis detection"
   Proceedings of the 20th Conference on decision and control - Los Angeles, CA - December 1987
[19] R.R. YAGER
   "Entropy and specificity in a mathematical theory of Evidence"
   Int. J. General Systems - 1983 - Vol. 9 - p.p. 249-260
[20] M. ISHIZUKA
   "Inference methods based on extended Dempster and Shafer's theory for problems with uncertainty/fuzziness"
   New Generation Computing - 1 - 1983 OHMSHA, Ltd, and Springer Verlag - p.p. 159-168
[21] L.A. ZADEH
   "Fuzzy sets"
   Information and Control n° 8 - 1965 - p.p. 338-353
[22] L.A. ZADEH
   "Probability measures of fuzzy events"
   Journal of Mathematical Analysis and Applications - Vol. 23 - 1968 - p.p. 421-427
[23] A. KAUFMANN
   "Introduction à la théorie des sous-ensembles flous"
   Vol. 1, 2 et 3 - Masson - Paris - 1975
[24] M. SUGENO
   "Theory of fuzzy integrals and its applications"
   Tokyo Institute of Technology - 1974
[25] R.E. BELLMAN, L.A. ZADEH
   "Decision making in a fuzzy environment"
   Management Science, Vol. 17, No 4 - December 1970
[26] D. DUBOIS, N. PRADE
   "Fuzzy sets and systems - Theory and applications"
   Academic Press - New York - 1980
[27] L.A. ZADEH
   "Fuzzy sets as a basis for a theory of possibility"
   Fuzzy sets and Systems 1 - 1978 - p.p. 3-28
[28] D. DUBOIS
   "Modèles mathématiques de l'imprécis et de l'incertain en vue d'applications aux techniques d'aide à la décision"
   Thèse de Docteur d'Etat ès Sciences - Université de Grenoble - 1983
[29] D. DUBOIS, N. PRADE
   "Théorie des possibilités : application à la représentation des connaissances en informatique"
   Masson - Paris - 1985

Lors de la fusion desdites troisièmes valeurs, lesdites secondes valeurs interviennent comme des indices représentatifs de la qualité de chaque critère de reconnaissance. Il va de soi que l'on pourrait faire intervenir, lors de la fusion, d'autres indices, par exemple de qualité, de confiance ou de préférence.

On remarquera que cette fusion peut être effectuée sur des grandeurs certaines ou sur des grandeurs incertaines, c'est-à-dire définies par un intervalle de valeurs.

Dans une forme avantageuse de mise en oeuvre, le procédé selon l'invention est de plus remarquable en ce que :
- dans ladite seconde étape préparatoire, on établit pour chaque critère Ck nxp secondes valeurs PCk(Ti) représentatives chacune de la probabilité que la cible (Ti) est reconnue, alors que c'est la cible (Tj) qui est examinée (avec j = 1, 2, 3, ..., n) ;
- dans l'étape de la reconnaissance :
   . on établit des troisièmes valeurs pCk(Ti) représentatives des probabilités pour que la cible (T) à reconnaître soit chacune desdites n cibles connues (Ti) en ce qui concerne chacun desdits p critères ;
   . on fusionne entre elles les nxp troisièmes valeurs associées à une même cible (Ti) en prenant en compte lesdites nxp secondes valeurs.

Il est avantageux que, dans ladite première étape préparatoire, lesdites premières valeurs soient enregistrées critère par critère pour toutes lesdites cibles connues (Ti), de façon que soient regroupées toutes lesdites premières valeurs de toutes lesdites cibles correspondant à un critère.

La détermination desdites premières valeurs peut être réalisée par examen direct desdites cibles connues (Ti) ou bien à partir de maquettes ou de plans desdites cibles connues.

De préférence, dans ladite seconde étape préparatoire, lesdites secondes valeurs sont obtenues par comparaison desdites premières valeurs avec des mesures de chacune desdites cibles selon chacun desdits critères, lesdites mesures étant répétées de nombreuses fois.

Lesdites secondes valeurs sont avantageusement enregistrées dans des mémoires matricielles, chaque mémoire matricielle étant associée à un critère, et à chaque emplacement d'enregistrement d'une telle mémoire matricielle étant enregistrée la probabilité, pour ledit critère, qu'une cible connue soit reconnue alors qu'une autre cible connue est soumise à l'examen direct.

La présente invention concerne de plus un dispositif pour reconnaître une cible (T) parmi une pluralité de n cibles connues Ti (avec i = 1, 2, 3, ..., n). Selon l'invention, ce dispositif est remarquable en ce qu'il comporte :
- des moyens de détection susceptibles d'examiner ladite cible (T) et de délivrer au moins une valeur pour chacun d'une pluralité P de critères de reconnaissance Ck (avec k = 1, 2, ..., p) ;
- des premiers moyens de mémoire dans lesquels sont enregistrés des premières valeurs (Cki) représentatives, pour chacune desdites cibles connues (Ti), de ladite pluralité de critères de reconnaissance Ck ;
- des moyens de comparaison dans lesquels sont comparées lesdites valeurs délivrées par lesdits moyens de détection et lesdites premières valeurs enregistrées ;
- des seconds moyens de mémoire dans lesquels sont enregistrées des secondes valeurs PCk(Ti) représentatives des probabilités pour que, pour chaque critère Ck, une cible connue (Ti) soit reconnue ;
- une pluralité de moyens de calcul respectivement associés à une cible connue (Ti), reliés aux sorties desdits moyens de comparaison et desdits seconds moyens de mémoire et susceptibles de réaliser, cible connue par cible connue, la fusion des résultats de la comparaison effectuée par lesdits moyens de comparaison en tenant compte desdites secondes valeurs ; et
- un dispositif à maximum recevant les sorties desdits moyens de calcul et délivrant à sa sortie l'identité de la cible (T) à reconnaître.

Avantageusement, lesdits premiers moyens de mémoire comportent une pluralité de p mémoires dont chacune d'elles contient, pour un critère Ck particulier, les valeurs dudit critère particulier Ck pour toutes les cibles connues (Ti).

Par ailleurs, de préférence, lesdits seconds moyens de mémoire comportent une pluralité de p mémoires matricielles dont chacune d'elles contient, pour un critère Ck particulier, lesdites secondes valeurs PCk(Ti) pour toutes les cibles connues (Ti).

Lesdits moyens de comparaison peuvent être constitués d'une pluralité de comparateurs individuels dont chacun d'eux compare une valeur venant desdits moyens de détection avec une desdites premières valeurs.

Les figures du dessin annexé feront bien comprendre comment l'invention peut être réalisée. Sur ces figures, des références identiques désignent des éléments semblables.

La figure 1 illustre schématiquement la première étape préparatoire du procédé conforme à la présente invention.

Les figures 2, 3 et 4 illustrent schématiquement différentes phases de la seconde étape préparatoire du procédé conforme à la présente invention.

La figure 5 montre le schéma synoptique du dispositif de reconnaissance conforme à la présente invention.

Les figures 6, 7 et 8 illustrent schématiquement différentes phases de l'étape de reconnaissance du procédé conforme à la présente invention, dans une forme de mise en oeuvre simplifiée.

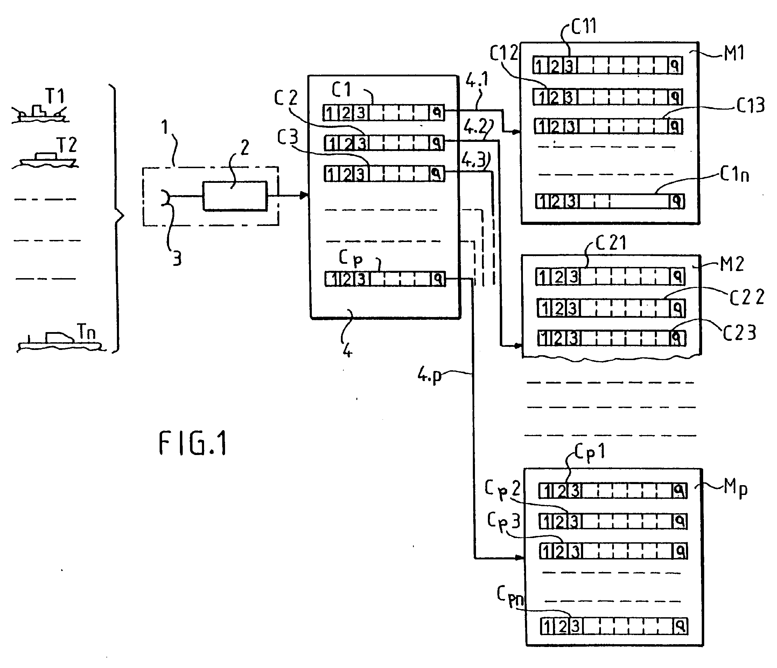

Le système montré schématiquement par la figure 1 permet la mise en oeuvre de la première étape préparatoire du procédé conforme à la présente invention. Ce système comporte un capteur 1, par exemple constitué par un radar 2 et son antenne 3, un dispositif 4 permettant d'extraire des caractéristiques (ou critères) désirées du signal engendré par le capteur 1, ainsi qu'une pluralité de p mémoires M1 à Mp.

Une pluralité de n cibles potentielles T1 à Tn est présentée devant le capteur 1. Celui-ci observe lesdites cibles une à une, successivement et le dispositif 4 fournit pour chaque cible observée une pluralité de p critères C1 à Cp, chacun desdits critères ayant q valeurs.

Parmi les critères utilisés, on peut citer :
- des critères définissant la forme de la réponse impulsionnelle radar non cohérente d'une cible observée (longueur, inertie, fonction d'autocorrélation moyenne ...) ;
- des critères définissant la forme de la réponse radar d'une cible à différentes fréquences ;
- des critères définissant la forme de la signature Doppler d'une cible ;
- des critères définissant la forme de la réponse radar d'une cible en fonction de son attitude relative par rapport au capteur ;
- la polarisation de la réponse radar d'une cible observée par rapport à la polarisation émise par le radar ;
- des critères définissant la forme de la cible dans une image haute résolution type SAR (Synthetic Aperture Radar) ou ISAR (Inverse Synthetic Aperture Radar), (moments, coefficients de Fourier ...), ou sa texture.

Ainsi, pour chaque cible T1 à Tn observée, le dispositif d'extraction 4 fournit p critères C1 à Cp, chacun de ces critères se présentant sous la forme d'un ensemble de q valeurs en fonction du paramètre considéré (attitude, distance, fréquence, polarisation, etc ...).

On commence par présenter la cible T1 au capteur 1 et on fait varier le paramètre dont dépend le critère C1. Pour q valeurs particulières de ce paramètre, le dispositif d'extraction 4 fournit sur sa sortie 4.1 les q valeurs correspondantes du critère C1, qui sont enregistrées dans une zone C11 de la mémoire M1. De façon identique, on fait varier le paramètre dont dépend le critère C2 et, pour q valeurs particulières de ce paramètre (qui peut être le même que le précédent), le dispositif d'extraction 4 fournit sur sa sortie 4.2 les q valeurs correspondantes du critère C2, qui sont enregistrées dans une zone C21 de la mémoire M2. On effectue des opérations semblables pour tous les autres critères jusqu'au critère Cp, apparaissant à la sortie 4.p du dispositif 4, dont les q valeurs sont enregistrées dans une zone Cp1 de la mémoire Mp.

Ensuite, on remplace la cible T1 par la cible T2 devant le capteur 1 et, de façon identique à ce qui a été dit ci-dessus, on mesure q valeurs de chacun des critères C1 à Cp pour ladite cible T2. Les q valeurs du critère C1 pour la cible T2 sont enregistrées dans une zone C12 de la mémoire M1, les q valeurs du critère C2 pour la cible T2 sont enregistrées dans une zone C22 de la mémoire M2, etc ..., et les q valeurs du critère Cp pour la cible T2 sont enregistrées dans une zone Cp2 de la mémoire Mp.

Le processus précédemment décrit est recommencé pour chacune des cibles suivantes T3 à Tn et à chaque fois :
- les q valeurs du critère C1 pour la cible T3 sont enregistrées dans une zone C13 de la mémoire M1 ;
- les q valeurs du critère C2 pour la cible T3 sont enregistrées dans une zone C23 de la mémoire M2 ;
- etc ... ;
- les q valeurs du critère Cp pour la cible T3 sont enregistrées dans une zone Cp3 de la mémoire Mp ;
- etc ... ;
- les q valeurs du critère C1 pour la cible Tn sont enregistrées dans une zone C1n de la mémoire M1 ;
- les q valeurs du critère C2 pour la cible Tn sont enregistrées dans une zone C2n de la mémoire M2 ;
- etc ... ;
- les q valeurs du critère Cp pour la cible Tn sont enregistrées dans une zone Cpn de la mémoire Mp.

Ainsi, les n zones C11 à C1n de la mémoire M1 contiennent les q valeurs du critère C1, respectivement pour les n cibles T1 à Tn ; les n zones C21 à C2n de la mémoire M2 contiennent les q valeurs du critère C2, respectivement pour les n cibles T1 à Tn ; etc ... et les n zones Cp1 à Cpn de la mémoire Mp contiennent les q valeurs du critère Cp, respectivement pour les n cibles T1 à Tn. Les p mémoires M1 à Mp sont donc chacune associées à un critère C1 à Cp et contiennent la valeur du critère correspondant pour chacune des cibles T1 à Tn observée.

On remarquera que les cibles T1 à Tn utilisées dans le système de la figure 1 peuvent ne pas être des cibles réelles, mais des maquettes représentatives desdites cibles. On remarquera de plus que la première étape préparatoire du procédé conforme à la présente invention n'est pas forcément une étape d'apprentissage, comme cela a été décrit en regard de la figure 1, l'apprentissage n'étant qu'une possibilité pour l'obtention des mémoires M1 à Mp. En effet, dans le cas où les caractéristiques physiques des cibles réelles sont connues, il est possible de charger les différentes zones C11, C12, ..., C1n, C21, C22, ..., C2n, C31, ..., Cpn des mémoires M1 à Mp à l'aide d'informations obtenues par un calcul théorique.

On remarquera de plus qu'au lieu d'être délivrés par un unique capteur 1, comme cela a été représenté sur les figures 1, les p critères C1 à Cp pourraient être obtenus à l'aide de deux ou de plusieurs capteurs.

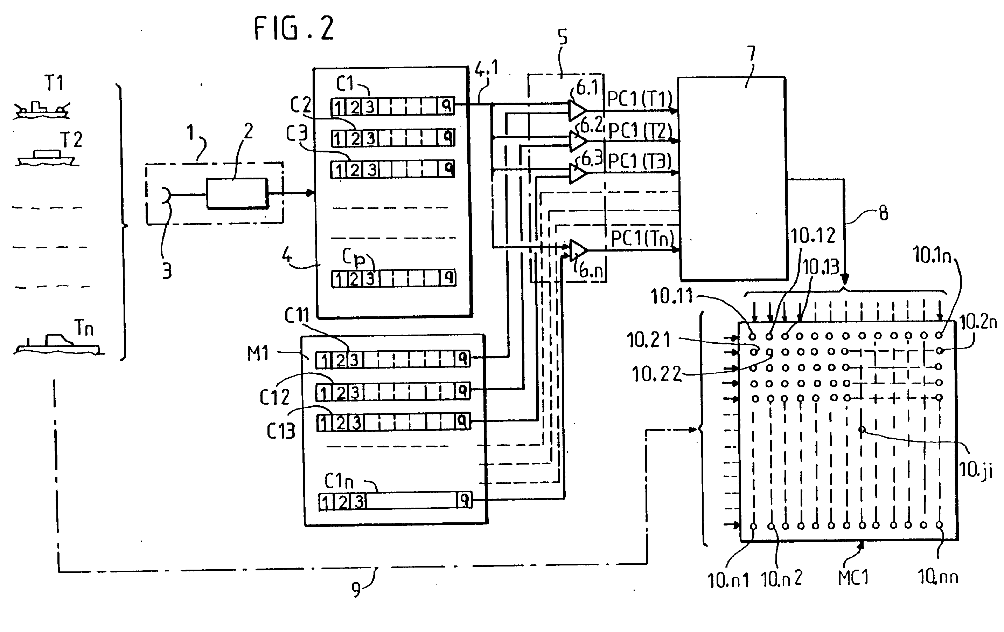

La figure 2 illustre une première phase de la seconde étape préparatoire du procédé conforme à la présente invention. Sur cette figure, on a représenté un système comportant, comme le système de la figure 1, le capteur 1 (ou un capteur identique) et le dispositif d'extraction 4. Le système de la figure 2 comporte de plus un dispositif de comparaison 5 comprenant n comparateurs 6.1, 6.2, ..., 6.n, ainsi qu'un dispositif d'optimisation 7, une mémoire matricielle MC1 à n lignes et n colonnes et la mémoire M1 précédemment décrite. La sortie 4.1 du dispositif d'extraction 4 est reliée à une entrée de chacun des comparateurs 6.1 à 6.n, tandis que les autres entrées de ceux-ci sont respectivement reliées aux zones C11 à C1n de la mémoire M1. Les sorties des comparateurs 6.1 à 6.n sont reliées au dispositif d'optimisation 7. La sortie 8 de celui-ci permet l'inscription d'informations dans les colonnes de la mémoire matricielle MC1. Par ailleurs, une commande 9 permet de choisir une ligne d'inscription de ladite mémoire matricielle.

Le système de la figure 2 fonctionne de la façon suivante :
A -
   a) On présente une première fois la cible T1 au capteur 1, de sorte qu'à la sortie 4.1 du dispositif d'extraction 4 apparaît la valeur actuelle du critère C1 pour la cible T1 en cours d'observation. Dans le comparateur 6.1, cette valeur actuelle est comparée à la valeur correspondante préenregistrée dans la zone C11 de la mémoire M1 et à la sortie dudit comparateur 6.1 apparaît une valeur représentative de la probabilité que, en ce qui concerne le critère C1, la cible actuellement reconnue par le capteur 1 et le dispositif d'extraction 4, est bien la cible T1. Par la suite, cette probabilité est notée PC1(T1). Bien entendu, si le capteur 1 et les conditions de reconnaissance étaient parfaits, cette probabilité PC1(T1) serait alors égale à 1.
      De même, dans le comparateur 6.2, la valeur actuelle du critère C1 pour la cible T1 en cours d'examen est comparée à la valeur préenregistrée dans la zone C12 de la mémoire M1. Cette dernière valeur préenregistrée est relative à la valeur du critère C1 pour la cible T2. Ainsi, à la sortie du comparateur 6.2 apparaît une valeur représentative de la probabilité que, en ce qui concerne le critère C1, la cible actuellement reconnue par le capteur 1 et le dispositif d'extraction 4, est la cible T2. Cette probabilité est notée PC1(T2). Bien entendu, si le capteur 1 et les conditions de reconnaissance étaient parfaits, cette probabilité PC1(T2) serait alors égale à 0.
      De façon analogue, on voit qu'à la sortie du comparateur 6.3 apparaît une valeur représentative de la probabilité PC1(T3) que, en ce qui concerne le critère C1, la cible actuellement reconnue par le capteur 1 et le dispositif d'extraction 4, est la cible T3.
      Il en est de même pour les différents comparateurs 6.i (avec i = 1, 2, 3, ...,n) de sorte que, grâce à la première présentation de la cible T1 au capteur 1, un premier ensemble de valeurs pour les probabilités PC1(T1), PC1(T2), PC1(T3), ..., PC1(Tn) est adressé au dispositif d'optimisation 7, qui met en mémoire ledit premier ensemble de valeurs.
   b) Après enregistrement dudit premier ensemble de valeurs des probabilités PC1(Ti), on présente une deuxième fois la cible T1 au capteur 1 et, de façon semblable à ce qui a été décrit ci-dessus, on obtient un deuxième ensemble de valeurs pour les probabilités PC1(Ti), qui est également enregistré dans le dispositif d'optimisation 7.
   c) On recommence (N1-2) fois la présentation de la cible T1 au capteur 1, de sorte que l'on obtient au total N1 ensembles de valeurs pour les probabilités PC1(Ti), ces N1 ensembles de valeurs étant stockés dans le dispositif d'optimisation 7.
   d) A partir de ces N1 ensembles de valeurs, le dispositif d'optimisation 7 (qui est par exemple du type à détermination de maximum, suivi d'un comptage des différentes décisions et d'une normalisation par N1) détermine un premier ensemble unique optimisé des n valeurs pour les probabilités PC1(Ti), disponible à sa sortie 8.
   e) Ce premier ensemble unique optimisé de valeurs est alors inscrit dans la première ligne de la mémoire MC1, qui est sensibilisée à cet effet par la commande 9, de façon que :
      - à l'emplacement 10.11 de la première ligne et de la première colonne de la matrice MC1 soit enregistrée la valeur PC1(T1) dudit premier ensemble unique optimisé de valeurs ;
      - à l'emplacement 10.12 de la première ligne et de la deuxième colonne de la matrice MC1 soit enregistrée la valeur PC1(T2) dudit premier ensemble unique optimisé de valeurs ;
      - à l'emplacement 10.13 de la première ligne et de la troisième colonne de la matrice MC1 soit enregistrée la valeur PC1(T3) dudit premier ensemble unique optimisé de valeurs ;
      - etc ... ;
      - à l'emplacement 10.1n de la première ligne et de la nième colonne de la matrice MC1 soit enregistrée la valeur PC1(Tn) dudit premier ensemble unique optimisé de valeurs.
   On voit ainsi qu'à un emplacement quelconque 10.1i de la première ligne de la matrice MC1 est enregistrée une valeur de PC1(Ti), correspondant à la probabilité que, en ce qui concerne le critère C1, la cible reconnue est la cible Ti, alors que la cible présentée est la cible T1.
B -
   a) On recommence les différentes opérations a à e du paragraphe A ci-dessus, mais cette fois en présentant un grand nombre de fois N2 la cible T2 au capteur 1. Bien entendu, N2 peut être égal à N1.
   b) On obtient donc, à la sortie du dispositif d'optimisation 7 de la figure 2, un deuxième ensemble unique optimisé de valeurs PC1(Ti), pour la présentation de la cible T2.
   c) Par la liaison 9, on sensibilise maintenant la deuxième ligne de la matrice MC1 et on y inscrit ce deuxième ensemble de valeurs, de façon que :
      - à l'emplacement 10.21 de la deuxième ligne et de la première colonne de la matrice MC1 soit enregistrée la valeur PC1(T1) dudit deuxième ensemble unique optimisé de valeurs ;
      - à l'emplacement 10.22 de la deuxième ligne et de la deuxième colonne de la matrice MC1 soit enregistrée la valeur PC1(T2) dudit deuxième ensemble unique optimisé de valeurs ;
      - etc ... ;
      - à l'emplacement 10.2n de la deuxième ligne et de la nième colonne de la matrice MC1 soit enregistrée la valeur PC1(Tn) dudit deuxième ensemble unique optimisé de valeurs.
      Ainsi, à un emplacement quelconque 10.2i de la deuxième ligne de la matrice MC1 est enregistrée une valeur de PC1(Ti) représentative de la probabilité que, en ce qui concerne le critère C1, la cible reconnue est la cible Ti, alors que la cible présentée est la cible T2.
C -
   a) On recommence les différentes opérations a à c du paragraphe B ci-dessus, en présentant successivement un grand nombre de fois chacune les cibles T3 à Tn devant le capteur 1 et en inscrivant, à chaque fois, l'ensemble unique optimisé de valeurs PC1(Ti) obtenu dans la ligne correspondante de la mémoire matricielle MC1 ;
   b) Ainsi, à un emplacement quelconque 10.ji de la mémoire matricielle MC1 (avec i = 1, 2, 3, ..., n en ce qui concerne les colonnes de la matrice MC1 et j = 1, 2, 3, ..., n en ce qui concerne les lignes de ladite matrice), on a inscrit une valeur de PC1(Ti) représentative de la probabilité que, en ce qui concerne, le critère C1, la cible reconnue est la cible Ti, alors que la cible présentée est la cible Tj.

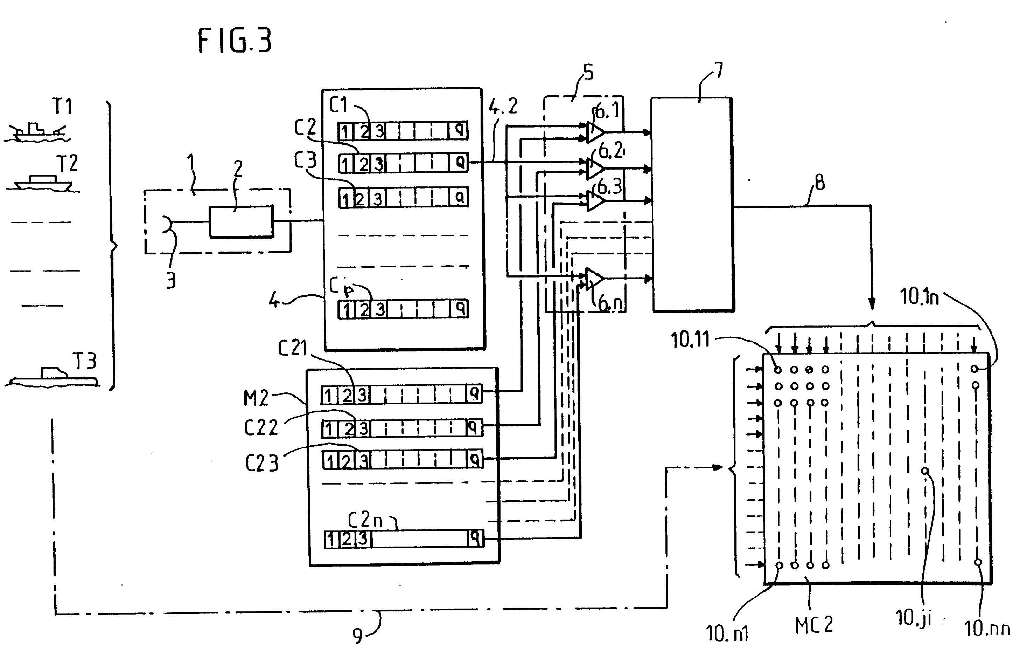

La figure 3 illustre une deuxième phase de la seconde étape préparatoire du procédé conforme à la présente invention. Sur cette figure, on retrouve, comme sur la figure 2, le capteur 1, le dispositif d'extraction 4, le dispositif de comparaison 5, le dispositif d'optimisation 7 et la commande 9. Toutefois, la mémoire M1 est remplacée par la mémoire M2 et la mémoire matricielle MC1 par une mémoire matricielle MC2, également à n lignes et n colonnes. Dans cette phase, la sortie 4.2 du dispositif d'extraction 4 est reliée à une entrée de chacun des comparateurs 6.1 à 6.n du dispositif 5, tandis que les autres entrées desdits comparateurs sont respectivement reliées aux zones C21 à C2n de la mémoire M2. La sortie 8 du dispositif d'optimisation 7 commande l'inscription dans les colonnes de la mémoire matricielle MC2, tandis que l'inscription dans les lignes de celle-ci est commandée, comme décrit pour la mémoire matricielle MC1, par la commande 9.

Avec le dispositif de la figure 3, on effectue des opérations similaires à celles décrites en regard de la figure 2, de sorte que, à un emplacement quelconque 10.ji de la mémoire matricielle MC2 est inscrite une valeur PC2(Ti) représentative de la probabilité que, en ce qui concerne le critère C2, la cible reconnue est la cible Ti, alors que la cible présentée est en réalité la cible Tj.

On poursuit des opérations analogues pour chacune des mémoires M3, M4, ..., Mp et à chaque fois on forme de façon semblable à ce qui a été précédemment décrit une mémoire matricielle MC3, MC4, ..., MCp.

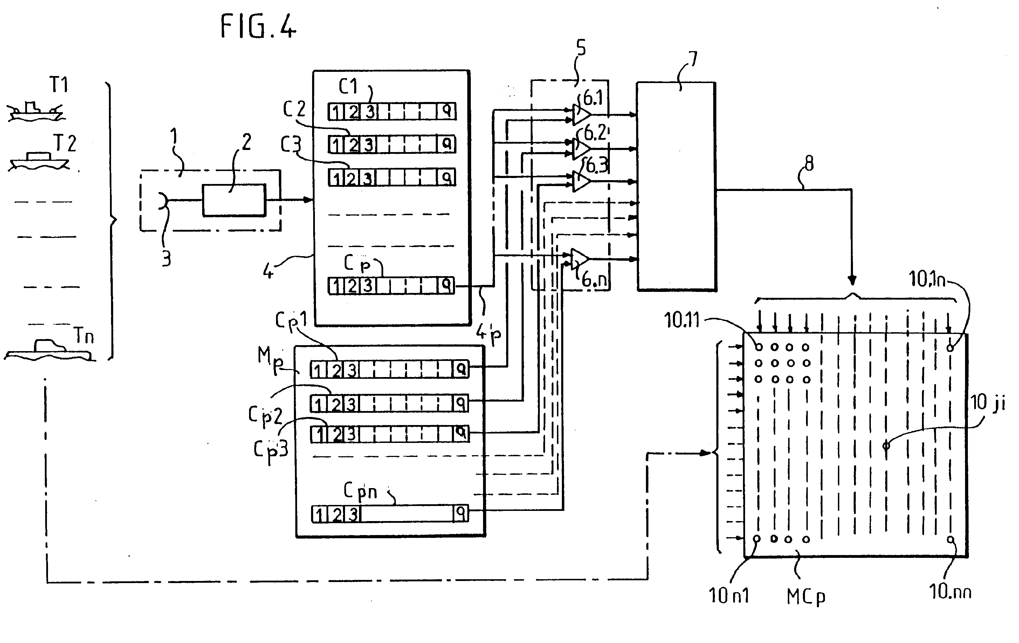

Sur la figure 4, on a illustré la pième et dernière phase de la seconde étape préparatoire du procédé conforme à la présente invention. La sortie 4p du dispositif d'extraction 4 est alors reliée à une entrée de chacun des comparateurs 6.1 à 6.n du dispositif 5, tandis que les autres entrées desdits comparateurs sont respectivement reliées aux zones Cp1 à Cpn de la mémoire Mp. La sortie 8 du dispositif d'optimisation 7 commande l'inscription dans les colonnes de la mémoire matricielle MCp, tandis que, comme précédemment, l'inscription dans les colonnes de celle-ci est commandée par la commande 9.

En se référant à ce qui a été décrit ci-dessus, on comprendra aisément que, à un emplacement quelconque 10.ji de la mémoire matricielle MCp, est inscrite une valeur PCp(Ti) représentative de la probabilité que, en ce qui concerne le critère Cp, la cible reconnue est la cible Ti, alors que la cible présentée est la cible Tj.

Ainsi, l'ensemble des p mémoires matricielles MC1 à MCp constitue une banque de probabilités telle que n'importe quel emplacement 10.ji d'une mémoire matricielle MCk quelconque (avec k = 1, 2, ..., p) contient une valeur PCk(Ti) représentative de la probabilité que, en ce qui concerne le critère Ck, la cible reconnue est la cible Ti, alors que la cible présentée est la cible Tj.

Les mémoires matricielles MC1 à MCp sont appelées ci-après matrices de confusion.

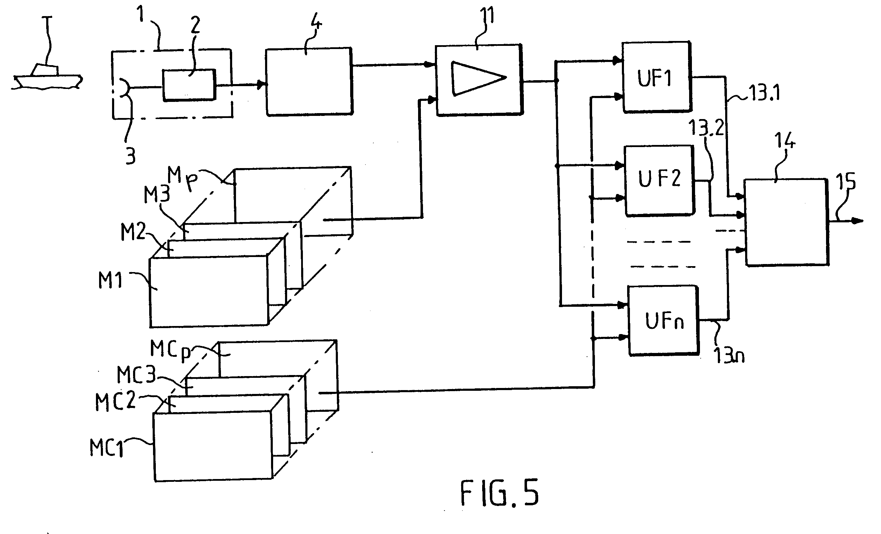

La figure 5 donne le schéma synoptique général du système conforme à la présente invention permettant de reconnaître une cible quelconque T, qui est l'une quelconque des cibles T1 à Tn précédemment évoquées, à partir des informations emmagasinées dans les mémoires M1 à Mp et dans les matrices de confusion MC1 à MCp.

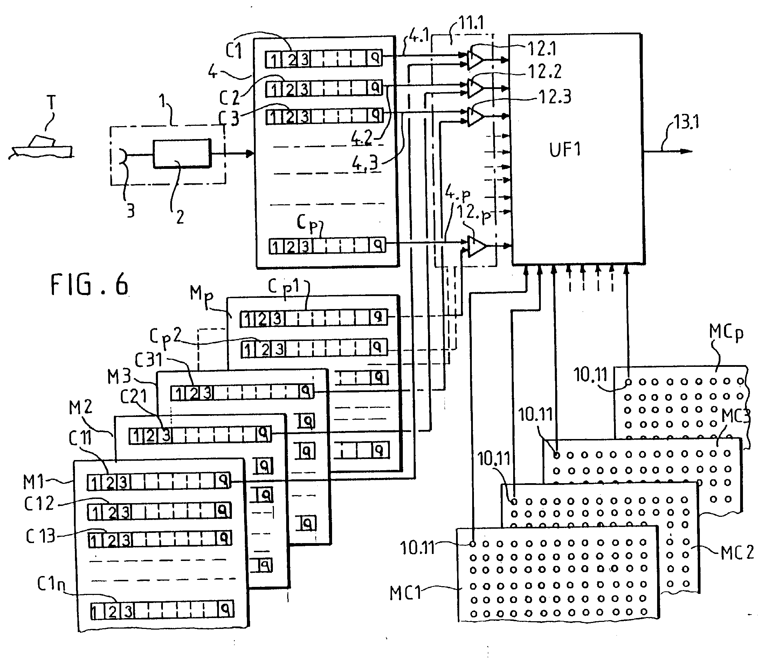

Le système de la figure 5 comporte le capteur 1 (ou un capteur identique) et le dispositif d'extraction 4 (ou un dispositif identique), ainsi que l'ensemble des mémoires M1 à Mp et l'ensemble des matrices de confusion MC1 à MCp. Il comporte de plus un dispositif de comparaison 11 comportant n ensembles 11.1 à 11.n comprenant chacun p comparateurs individuels 12.1 à 12.p (voir les figures 6 à 8), ainsi qu'un ensemble de n moyens de calcul ou unités de fusion UF1 à UFn, dont les sorties respectives 13.1 à 13.n sont reliées à un dispositif d'optimisation par maximum 14, à la sortie 15 duquel apparaît le résultat de l'identification de la cible T, c'est-à-dire le numéro i de la cible Ti, avec laquelle la cible T est reconnue identique.

Pour ce faire, le dispositif de comparaison 11 reçoit les signaux engendrés par le dispositif d'extraction 4, ainsi que le contenu des matrices M1 à Mp et il forme des signaux différentiels qui sont adressés aux unités de fusion UF1 à UFn. De plus, celles-ci reçoivent le contenu des matrices de confusion MC1 à MCp. Elles réalisent chacune la fusion de ces signaux différents et délivrent à leur sortie un signal présentant la probabilité que la cible T présentée au capteur 1 soit l'une des cibles Ti. Sur la sortie 13.1 de l'unité de fusion UF1 apparaît un signal représentatif de la probabilité que la cible T soit la cible T1, sur la sortie 13.2 de l'unité de fusion UF2 apparaît un signal représentatif de la probabilité que la cible T soit la cible T2, etc ..., et sur la sortie 13.n de l'unité de fusion UFn apparaît un signal représentatif de la probabilité que la cible T soit la cible Tn. Ces différents signaux représentatifs desdites probabilités sont reçus par le dispositif d'optimisation 14, qui désigne à sa sortie celle des cibles Ti constituée par la cible T.

Les figures 6 à 8 illustrent le fonctionnement du dispositif de la figure 5, dans le cas particulier où on n'utilise qu'une partie des informations contenues dans les matrices de confusion MC1 à MCp.

Dans une première étape (voir la figure 6), une entrée des comparateurs 12.1 à 12.p de l'ensemble de comparaison 11.1 est reliée respectivement à la sortie correspondante 4.1 à 4.p, tandis que l'autre entrée desdits comparateurs est reliée respectivement à la zone C11, C21, ..., Cp1 des mémoires M1 à Mp. Ainsi, le comparateur 12.1 de l'ensemble de comparaison 11.1 reçoit sur ses entrées, d'une part le signal émis sur la sortie 4.1 du dispositif d'extraction 4, c'est-à-dire la valeur actuelle du critère C1 pour la cible T en cours de reconnaissance, et, d'autre part, le signal de sortie de la zone C11 de la mémoire M1, c'est-à-dire la valeur précédemment enregistrée du critère C1 pour la cible T1. A la sortie du comparateur 12.1 de l'ensemble de comparaison 11.1 apparaît donc un signal représentatif de la probabilité que, pour le critère C1, la cible T en cours de reconnaissance soit la cible T1. De façon analogue, le comparateur 12.2 de l'ensemble de comparaison 11.1 reçoit sur ses entrées, d'une part le signal émis sur la sortie 4.2 du dispositif d'extraction 4, c'est-à-dire la valeur actuelle au critère C2 pour la cible T en cours de reconnaissance, et, d'autre part, le signal de sortie de la zone C21 de la mémoire M2, c'est-à-dire la valeur précédemment enregistrée du critère C2 pour la cible T1. A la sortie du comparateur 12.2 de l'ensemble de comparaison 11.1 apparaît donc un signal représentatif de la probabilité que, pour le critère C2, la cible T en cours de reconnaissance soit la cible T1. Etc ... Enfin, le comparateur 12.p de l'ensemble de comparaison 11.1 reçoit sur ses entrées, d'une part le signal émis sur la sortie 4p du dispositif d'extraction 4, c'est-à-dire la valeur actuelle du critère Cp pour la cible T en cours de reconnaissance, et, d'autre part, le signal de sortie de la zone Cp1 de la mémoire Mp, c'est-à-dire la valeur précédemment enregistrée du critère Cp pour la cible T1. A la sortie du comparateur 12.p de l'ensemble de comparaison 11.1 apparaît donc un signal représentatif de la probabilité que, pour le critère Cp, la cible T en cours de reconnaissance soit la cible T1.

Par suite, l'ensemble de comparaison 11.1 peut adresser à l'unité de fusion UF1 les différentes probabilités résultant du processus de reconnaissance et indiquant que, pour les critères Ck (avec k = 1, 2, 3, ..., p), la cible T soit la cible T1. Ces probabilités sont notées pCk(T1).

L'unité de fusion UF1 reçoit par ailleurs, des matrices de confusion MC1 à MCp les valeurs enregistrées dans leurs emplacements 10.11, c'est-à-dire les différentes probabilités précédemment enregistrées PC1(T1), PC2(T1), ..., PCp(T1), notées ci-après PCk(T1).

L'unité de fusion UF1 fusionne mathématiquement les différentes probabilités pCk(T1) et délivre à sa sortie 13.1 une valeur unique, tous critères Ck confondus, représentative de la probabilité p(T1) que la cible T soit la cible T1.

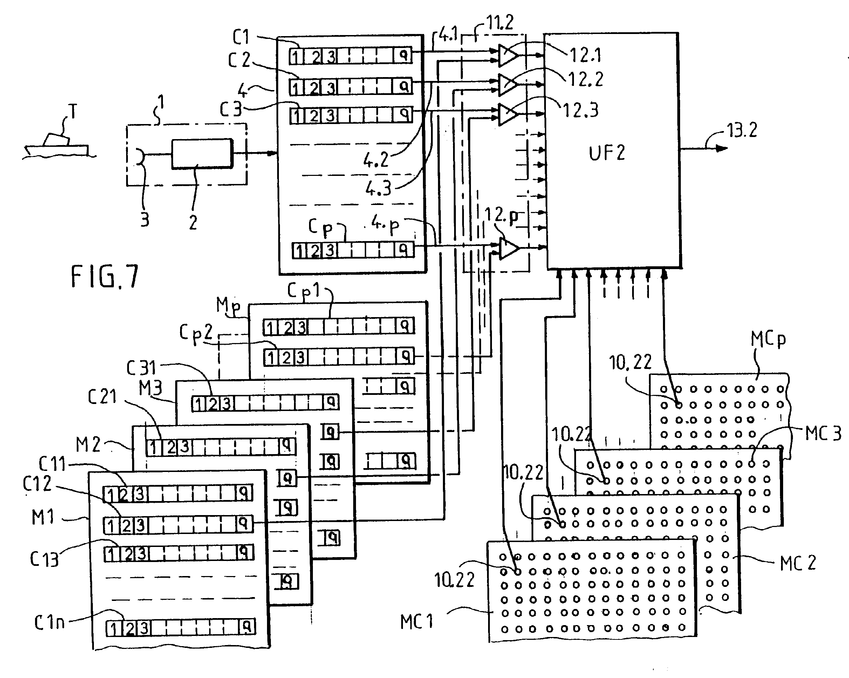

Dans une deuxième étape (voir la figure 7), une entrée des comparateurs 12.1 à 12.p de l'ensemble de comparaison 11.2 est reliée respectivement à la sortie correspondante 4.1 à 4.p, tandis que l'autre entrée desdits comparateurs est reliée respectivement à la zone C12, C22, ..., Cp2 des mémoires M1 à Mp. Ainsi, le comparateur 12.1 de l'ensemble de comparaison 11.2 reçoit sur ses entrées, d'une part le signal émis sur la sortie 4.1 du dispositif d'extraction 4, c'est-à-dire la valeur actuelle du critère C1 pour la cible T en cours de reconnaissance, et, d'autre part, le signal de sortie de la zone C12 de la mémoire M1, c'est-à-dire la valeur précédemment enregistrée du critère C1 pour la cible T2. A la sortie du comparateur 12.1 de l'ensemble de comparaison 11.2 apparaît donc un signal représentatif de la probabilité que, pour le critère C1, la cible T en cours de reconnaissance soit la cible T2. De façon analogue, le comparateur 12.2 de l'ensemble de comparaison 11.2 reçoit sur ses entrées, d'une part le signal émis sur la sortie 4.2 du dispositif d'extraction 4, c'est-à-dire la valeur actuelle du critère C2 pour la cible T en cours de reconnaissance, et, d'autre part, le signal de sortie de la zone C22 de la mémoire M2, c'est-à-dire la valeur précédemment enregistrée du critère C2 pour la cible T2. A la sortie du comparateur 12.2 de l'ensemble de comparaison 11.2 apparaît donc un signal représentatif de la probabilité que, pour le critère C2, la cible T en cours de reconnaissance soit la cible T2. Etc ... Enfin, le comparateur 12.p de l'ensemble de comparaison 11.2 reçoit sur ses entrées, d'une part le signal émis sur la sortie 4p du dispositif d'extraction 4, c'est-à-dire la valeur actuelle du critère Cp pour la cible T en cours de reconnaissance, et, d'autre part, le signal de sortie de la zone Cp2 de la mémoire Mp, c'est-à-dire la valeur précédemment enregistrée du critère Cp pour la cible T2. A la sortie du comparateur 12.p de l'ensemble de comparaison 11.2 apparaît donc un signal représentatif de la probabilité que, pour le critère Cp, la cible T en cours de reconnaissance soit la cible T2.

Par suite, l'ensemble de comparaison 11.2 peut adresser à l'unité de fusion UF2 les différentes probabilités résultant du processus de reconnaissance et indiquant que, pour les critères Ck (avec k = 1, 2, 3, ..., p), la cible T soit la cible T2. Ces probabilités sont notées pCk(T2).

L'unité de fusion UF2 reçoit par ailleurs, des matrices de confusion MC1 à MCp, les valeurs enregistrées dans leurs emplacements 10.22, c'est-à-dire les différentes probabilités précédemment enregistrées PC1(T2), PC2(T2), ..., PCp(T2), notées ci-après PCk(T2).

L'unité de fusion UF2 fusionne mathématiquement les différentes probabilités pCk(T2) et délivre à sa sortie 13.2 une valeur unique, tous critères Ck confondus, représentative de la probabilité p(T2) que la cible T soit la cible T2. Etc ...

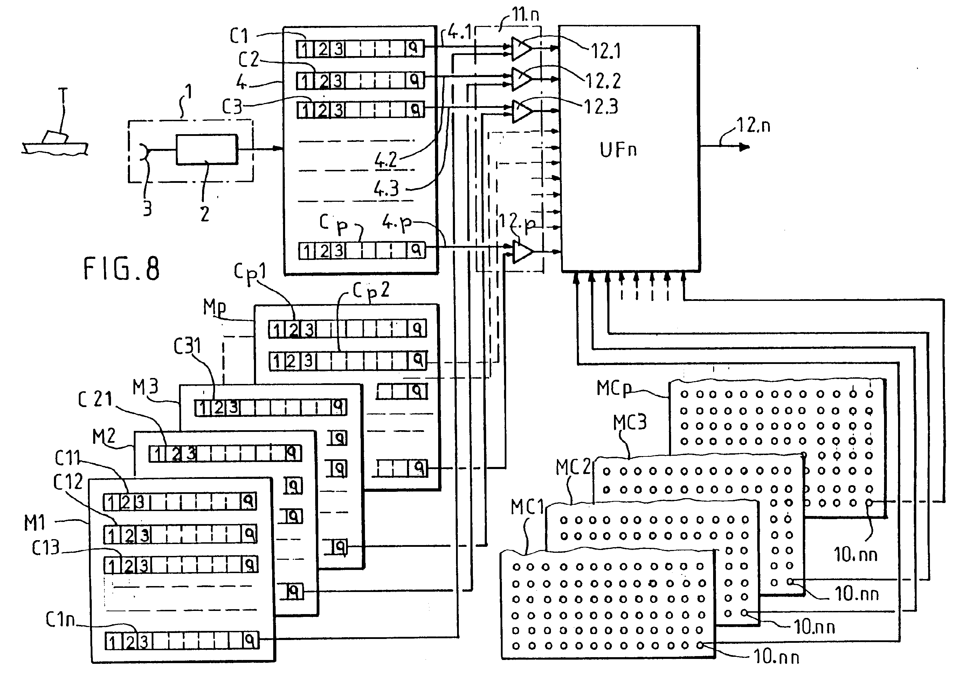

Dans une nième étape (voir la figure 8), une entrée des comparateurs 12.1 à 12.p de l'ensemble de comparaison 11.n est reliée respectivement à la sortie correspondante 4.1 à 4.p, tandis que l'autre entrée desdits comparateurs est reliée respectivement à la zone C1n, C2n, ..., Cpn des mémoires M1 à Mp. Ainsi, le comparateur 12.1 de l'ensemble de comparaison 11.n reçoit sur ses entrées, d'une part le signal émis sur la sortie 4.1 du dispositif d'extraction 4, c'est-à-dire la valeur actuelle du critère C1 pour la cible T en cours de reconnaissance, et, d'autre part, le signal de sortie de la zone C1n de la mémoire M1, c'est-à-dire la valeur précédemment enregistrée du critère C1 pour la cible Tn. A la sortie du comparateur 12.1 de l'ensemble de comparaison 11.n apparaît donc un signal représentatif de la probabilité que, pour le critère C1, la cible T en cours de reconnaissance soit la cible Tn. De façon analogue, le comparateur 12.2 de l'ensemble de comparaison 11.n reçoit sur ses entrées, d'une part le signal émis sur la sortie 4.2 du dispositif d'extraction 4, c'est-à-dire la valeur actuelle du critère C2 pour la cible T en cours de reconnaissance, et, d'autre part, le signal de sortie de la zone C2n de la mémoire M2, c'est-à-dire la valeur précédemment enregistrée du critère C2 pour la cible Tn. A la sortie du comparateur 12.2 de l'ensemble de comparaison 11.n apparaît donc un signal représentatif de la probabilité que, pour le critère C2, la cible T en cours de reconnaissance soit la cible Tn. Etc ... Enfin, le comparateur 12.p de l'ensemble de comparaison 11.n reçoit sur ses entrées, d'une part le signal émis sur la sortie 4p du dispositif d'extraction 4, c'est-à-dire la valeur actuelle du critère Cp pour la cible T en cours de reconnaissance, et, d'autre part, le signal de sortie de la zone Cpn de la mémoire Mp, c'est-à-dire la valeur précédemment enregistrée du critère Cp pour la cible Tn. A la sortie du comparateur 12.p de l'ensemble de comparaison 11.n apparaît donc un signal représentatif de la probabilité que, pour le critère Cp, la cible T en cours de reconnaissance soit la cible Tn.

Par suite, l'ensemble de comparaison 11.n peut adresser à l'unité de fusion UFn les différentes probabilités résultant du processus de reconnaissance et indiquant que, pour les critères Ck (avec k = 1, 2, 3, ..., p), la cible T soit la cible Tn. Ces probabilités sont notées pCk(Tn).

L'unité de fusion UFn reçoit par ailleurs, des matrices de confusion MC1 à MCp, les valeurs enregistrées dans leurs emplacements 10.nn, c'est-à-dire les différentes probabilités précédemment enregistrées PC1(Tn), PC2(Tn), ..., PCp(Tn), notées ci-après PCk(Tn).

L'unité de fusion UFn fusionne mathématiquement les différentes probabilités pCk(Tn) et délivre à sa sortie 13.n une valeur, tous critères Ck confondus, représentative de la probabilité p(Tn) que la cible T soit la cible Tn.

Le dispositif d'optimisation 14 reçoit donc, des différentes sorties 13.i des unités de fusion UFi, les différentes probabilités P(Ti) et il peut indiquer sur sa sortie 15, le numéro i pour lequel la probabilité p(Ti) est la plus grande, c'est-à-dire qu'il indique que la cible T en cours de reconnaissance est la cible Ti, dont les particularités avaient été enregistrées.

Du dispositif décrit en regard des figures 6 à 8, on peut remarquer :
A - que chaque unité de fusion particulière UFi reçoit de l'ensemble de comparaison 11.i correspondant les p probabilités pCk(Ti) mesurées lors de la reconnaissance, ainsi que les p probabilités PCk(Ti) préalablement enregistrées. Chacune de ces probabilités PCk(Ti) est un indice de qualité de chaque critère Ck par rapport à chaque hypothèse Ti. Ainsi, la fusion des probabilités PCk(Ti), destinée à fournir la probabilité p(Ti) correspondante à la sortie de l'unité de fusion UFi, peut tenir compte de la confiance que l'on peut attacher audit critére ;
B - qu'il est possible, en ajoutant des comparateurs 12 au dispositif de comparaison 11 et en prévoyant les liaisons adéquates entre les matrices M1 à Mp et lesdits comparateurs, d'introduire dans une unité de fusion particulière UFi non pas les p probabilités mesurées pCk(Ti), mais en réalité nxp probabilités mesurées pCk(Ti), en donnant à l'incidence i de ces dernières probabilités les n-1 autres valeurs 1 à n que celle à laquelle correspond l'indice i de UFi.
   Dans ce cas, on prévoit également les liaisons nécessaires pour adresser, à l'unité de fusion UFi, les nxp probabilités enregistrées correspondantes PCk(Ti) se trouvant dans les mémoires matricielles MCk.
   Pour des raisons de clarté de dessin, un tel mode de réalisation n'a pas été représenté.
C - Notamment dans le cas où l'on utilise les nxp probabilités mesurées pCk(Ti) et les nxp probabilités enregistrées PCk(Ti) en vue de la fusion dans chaque unité de fusion UFi, il est avantageux de rapprocher chaque pCk(Ti) mesurée de la PCk(Ti) correspondante enregistrée, non pas pour délivrer une valeur unique (valeur certaine), mais pour délivrer un intervalle de valeurs (valeurs incertaines) , la fusion s'effectuant alors dans chaque unité de fusion UFi sur nxp intervalles de valeurs, pour délivrer la probabilité p(Ti) correspondante.

## Revendications

1. Procédé pour reconnaître une cible (T) parmi une pluralité de n cibles connues Ti (avec i = 1, 2, 3, ..., n), selon lequel
dans une première étape préparatoire, pour chacune desdites cibles connues (Ti), on détermine des premières valeurs (Cki) représentatives d'une pluralité de p critères de reconnaissance Ck (avec k = 1, 2, 3, ..., p) ;
procédé caractérisé en ce que :
- dans une seconde étape préparatoire, on établit par examen direct desdites n cibles connues (Ti), à l'aide desdites premières valeurs (Cki) et pour chaque critère de reconnaissance (Ck), au moins n secondes valeurs (PCk(Ti)) représentatives des probabilités pour qu'une cible (Ti) soit reconnue lorsqu'elle est examinée ; et
- dans une étape de reconnaissance de ladite cible :
. on établit, par examen direct de ladite cible (T) à reconnaître et à partir desdites premières valeurs (Cki) déterminées par ladite première étape préparatoire, au moins p troisièmes valeurs (pCk(Ti)) représentatives des probabilités pour que, pour chaque critère de reconnaissance (Ck), la cible (T) à reconnaître soit chacune desdites cibles connues (Ti) ;
. on fusionne entre elles lesdites troisièmes valeurs associées à une même cible connue (Ti) en prenant en compte lesdites secondes valeurs, de façon à obtenir n quatrièmes valeurs (p(Ti)), dont chacune d'elles est représentative de la probabilité que la cible à reconnaître est l'une des cibles connues (Ti) ; et
. on détermine l'identité de la cible à reconnaître (T) à partir de la plus grande desdites quatrièmes valeurs.

2. Procédé selon la revendication 1,
caractérisé en ce que la fusion desdites troisièmes valeurs est obtenue par la mise en oeuvre de lois mathématiques données par l'une quelconque des théories que sont l'inférence de Bayes, le maximum d'entropie, la théorie de l'évidence ou la théorie des ensembles flous.

3. Procédé selon l'une des revendications 1 ou 2,
caractérisé en ce que lesdites troisièmes valeurs sont des valeurs certaines.

4. Procédé selon l'une des revendications 1 ou 2,
caractérisé en ce que lesdites troisièmes valeurs sont des valeurs incertaines.

5. Procédé selon l'une quelconque des revendications 1 à 4,
caractérisé en ce que :
- dans ladite seconde étape préparatoire, on établit pour chaque critère Ck nxp secondes valeurs PCk(Ti) représentatives chacune de la probabilité que la cible (Ti) est reconnue, alors que c'est la cible (Tj) qui est examinée (avec j = 1, 2, 3, ..., n) ;
- dans l'étape de la reconnaissance :
. on établit des troisièmes valeurs pCk(Ti) représentatives des probabilités pour que la cible (T) à reconnaître soit chacune desdites n cibles connues (Ti) en ce qui concerne chacun desdits p critères ;
. on fusionne entre elles les nxp troisièmes valeurs associées à une même cible (Ti) en prenant en compte lesdites nxp secondes valeurs.

6. Procédé selon l'une quelconque des revendications 1 à 5,
caractérisé en ce que, dans ladite première étape préparatoire, lesdites premières valeurs sont enregistrées critère par critère pour toutes lesdites cibles connues (Ti), de façon que soient regroupées toutes lesdites premières valeurs de toutes lesdites cibles correspondant à un critère.

7. Procédé selon l'une quelconque des revendications 1 à 6,
caractérisé en ce que la détermination desdites premières valeurs peut être réalisée par examen direct desdites cibles connues (Ti).

8. Procédé selon l'une quelconque des revendications 1 à 6,
caractérisé en ce que la détermination desdites premières valeurs est réalisée à partir de maquettes ou de plans desdites cibles connues.

9. Procédé selon l'une quelconque des revendications 1 à 8,
caractérisé en ce que, dans ladite seconde étape préparatoire, lesdites secondes valeurs sont obtenues par comparaison desdites premières valeurs avec des mesures de chacune desdites cibles selon chacun desdits critères, lesdites mesures étant répétées de nombreuses fois.

10. Procédé selon l'une quelconque des revendications 1 à 9,
caractérisé en ce que lesdites secondes valeurs sont avantageusement enregistrées dans des mémoires matricielles (MC1 à MCp), chaque mémoire matricielle étant associée à un critère, et à chaque emplacement d'enregistrement (10.ji) d'une telle mémoire matricielle étant enregistrée la probabilité, pour ledit critère, que la cible (Ti) soit reconnue alors que la cible (Tj) est soumise à l'examen direct.

11. Dispositif pour la mise en oeuvre du procédé selon la revendication 1, pour reconnaître une cible (T) parmi une pluralité de n cibles connues Ti (avec i = 1, 2, 3, ..., n), comprenant
- des moyens de détection (1, 2, 3, 4) susceptibles d'examiner ladite cible (T) et de délivrer au moins une valeur pour chacun d'une pluralité p de critères de reconnaissance Ck (avec k = 1, 2, ..., p) ;
- des premiers moyens de mémoire (M1, M2, ..., Mp) dans lesquels sont enregistrés des premières valeurs (Cki) représentatives, pour chacune desdites cibles connues (Ti), de ladite pluralité de critères de reconnaissance Ck ;
- des moyens de comparaison (11) dans lesquels sont comparées lesdites valeurs délivrées par lesdits moyens de détection et lesdites premières valeurs enregistrées ;
dispositif caractérisé en ce qu'il comporte :
- des seconds moyens de mémoire (MC1, MC2, ..., MCp) dans lesquels sont enregistrées des secondes valeurs PCk(Ti) représentatives des probabilités pour que, pour chaque critère Ck, une cible connue (Ti) soit reconnue ;
- une pluralité de moyens de calcul (UF1, UF2, ..., UFn) respectivement associés à une cible connue (Ti), reliés aux sorties desdits moyens de comparaison et desdits seconds moyens de mémoire et susceptibles de réaliser, cible connue par cible connue, la fusion des résultats de la comparaison effectuée par lesdits moyens de comparaison en tenant compte desdites secondes valeurs ;
- un dispositif à maximum (14) recevant les sorties desdits moyens de calcul (UF1 à UFn) et délivrant à sa sortie l'identité de la cible (T) à reconnaître.

12. Dispositif selon la revendication 11,
caractérisé en ce que lesdits premiers moyens de mémoire comportent une pluralité de p mémoires (M1 à Mp) dont chacune d'elles contient, pour un critère Ck particulier, les valeurs dudit critère particulier Ck pour toutes les cibles connues (Ti).

13. Dispositif selon l'une quelconque des revendications 11 ou 12,
caractérisé en ce que lesdits seconds moyens de mémoire comportent une pluralité de p mémoires matricielles (MC1 à MCp) dont chacune d'elles contient, pour un critère Ck particulier, lesdites secondes valeurs PCk(Ti) pour toutes les cibles connues (Ti).

14. Dispositif selon l'une quelconque des revendications 11 à 13,
caractérisé en ce que lesdits moyens de comparaison (11) sont constitués d'une pluralité de comparateurs individuels (12k) dont chacun d'eux compare une valeur venant desdits moyens de détection avec une desdites premières valeurs.

## Patentansprüche

1. Verfahren zur Identifizierung eines Zielobjektes (T) innerhalb einer Vielzahl von n bekannten Zielobjekten Ti (mit i = 1,2, 3, ..., n), nach dem,
in einer ersten Vorbereitungsetappe, für jedes der bekannten Zielobjekte (Ti) erste Werte (Cki) festgelegt werden, welche eine Vielzahl an p Identifizierungkriterien Ck (mit k = 1,2,3, ...,p) repräsentieren;
Verfahren, dadurch gekennzeichnet, daß
- in einer zweiten Vorbereitungsetappe durch direkte Prüfung der n bekannten Ziele (Ti) mit Hilfe der ersten Werte (Cki) und für jedes Identifizierungskriterium (Ck) mindestens n zweite Werte (PCk(Ti)) gebildet werden, welche die Wahrscheinlichkeiten repräsentieren, daß ein Zielobjekt (Ti) während seiner Überprüfung identifiziert wird ;und
- in einer Identifizierungsetappe des Zielobjektes :
. durch direkte Überprüfung des zu identifizierenden Zielobjektes (T) und anhand der ersten Werte (Cki), die durch die erste Vorbereitungsetappe festgelegt wurden, mindestens p dritte Werte (pCk(Ti)) gebildet werden, welche die Wahrscheinlichkeit repräsentieren, daß es sich, hinsichtlich der Identifizierungskriterien (Ck), bei dem zu identifizierenden Zielobjekt (T) um eines der bekannten Zielobjekte (Ti) handelt;
. die dritten Werte, welche mit einem gleichen bekannten Zielobjekt (Ti) assoziiert sind, mit ihnen verschmolzen werden, wobei die zweiten Werte berücksichtigt werden, so daß man n vierte Werte (p(Ti)) erhält, wobei jeder von ihnen die Wahrscheinlichkeit repräsentiert, daß es sich bei dem zu identifizierenden Zielobjekt um eines der bekannten Zielobjekte (Ti) handelt ; und
. die Identität des zu identifizierenden Zielobjektes (T) anhand des größten Wertes der vierten Werte festlegt wird.

2. Verfahren gemäß Anspruch 1,
dadurch gekennzeichnet, daß die Verschmelzung der dritten Werte durch die Anwendung der mathematischen Gesetzmäßigkeiten, die in einer beliebigen der Theorien, die als Satz von Bayes, Methode des Entropiemaximums, Evidenztheorie oder Theorie unscharfer Mengen bekannt sind, dargelegt werden.

3. Verfahren gemäß einem der Änsprüche 1 oder 2,
dadurch gekennzeichnet, daß die dritten Werte bestimmte Werte sind.

4. Verfahren gemäß einem der Ansprüche 1 oder 2,
dadurch gekennzeichnet, daß die dritten Werte unbestimmte Werte sind.

5. Verfahren gemäß einem der Ansprüche 1 bis 4,
dadurch gekennzeichnet, daß :
- während der zweiten Vorbereitungsetappe für jedes Kriterium Ck nxp zweite Werte PCk(Ti) gebildet werden, wobei jeder dieser Werte die Wahrscheinlichkeit repräsentiert, daß das Zielobjekt (Ti) identifiziert wird, während es sich bei dem überprüften Zielobjekt um das Zielobjekt (Tj) handelt (mit j = 1, 2, 3, ..., n);
- während der Identifizierungsetappe:
. dritte Werte pCk(Ti) gebildet werden, welche die Wahrscheinlichkeit darstellen, daß es sich bei dem zu identifizierenden Zielobjekt (T) um jedes der n bekannten Zielobjekte (Ti) handelt, und zwar hinsichtlich der p Kriterien;
. mit diesen die nxp dritten Werte verschmolzen werden, die mit einem gleichen Zielobjekt (Ti) assoziiert sind, wobei die zweiten Werte nxp berücksichtigt werden.

6. Verfahren gemäß einem der Ansprüche 1 bis 5,
dadurch gekennzeichnet, daß im Verlauf der ersten Vorbereitungsetappe, für alle bekannten Zielobjekte (Ti), die ersten Werte Kriterium für Kriterium eingespeichert werden, so daß die alle ersten Werte aller Zielobjekte, die einem Kriterium entsprechen, umgruppiert werden.

7. Verfahren gemäß einem der Ansprüche 1 bis 6,
dadurch gekennzeichnet, daß die Bestimmung der ersten Were durch direkte Prüfung der bekannten Zielobjekte (Ti) erfolgen kann.

8. Verfahren gemäß einem der Ansprüche 1 bis 6,
dadurch gekennzeichnet, daß die Bestimmung der ersten Werte anhand von Attrappen oder Plänen der bekannten Zielobjekte erfolgt.

9. Verfahren gemäß einem der Ansprüche 1 bis 8,
dadurch gekennzeichnet, daß im Verlauf der zweite Vorbereitungsetappe die zweiten Werte durch den Vergleich der ersten Werte mit Messungen eines jeden der Zielobjektes ermittelt werden, und zwar in Übereinstimmung mit jedem der Kriterien, wobei die Messungen viele Male wiederholt werden.

10. Verfahren gemäß einem der Ansprüche 1 bis 9,
dadurch gekennzeichnet, daß die zweiten Werte auf vorteilhafte Weise in Matrixspeichern (MC1 bisMCp) eingespeichert werden, wobei jeder Matrixspeicher mit einem Kriterium assoziiert ist, und an jeder Speicherstelle (10.ji) eines solchen Matrixspeichers die Wahrscheinlichkeit hinsichtlich des Kriteriums eingespeichert wird, daß das Zielobjekt (Ti) identifiziert wird, während das Zielobjekt (Tj) der direkten Prüfung unterzogen wird.

11. Vorrichtung zur Durchführung des Verfahrens gemäß Anspruch 1 zur - Identifizierung eines Zielobjektes (T) inmitten einer Vielzahl n bekannter Zielobjekte Ti (mit i = 1, 2, 3,..., n), die folgendes beinhaltet :
- Suchmittel (1, 2, 3, 4), die geeignet sind, das Zielobjekt (T) zu überprüfen und mindestens einen Wert für jedes einer Vielzahl p an Identifizierungskriterien (Ck) (mit k =1, 2, 3, ...,p) zu liefern
- erste Speicherungsmittel (M1, M2, ..., Mp), in denen die ersten Werte (Cki) gespeichert werden, die, für jedes der bekannten Zielobjekte (Ti), die Vielzahl an Identifizierungskriterien Ck repräsentieren;
- Vergleichsmittel (11), in denen die von den Suchmitteln gelieferten Werte mit den eingespeicherten ersten Werten verglichen werden ;
und die dadurch gekennzeichnet ist, daß sie folgendes umfaßt :
- zweite Speicherungsmittel (MC1, MC2 ..., MCp), in denen die zweiten Werte PCk(Ti) gespeichert werden, welche für jedes Kriterium Ck die Wahrscheinlichkeit darstellen, daß ein bekanntes Zielobjekt (Ti) identifiziert wird;
- eine Vielzahl an Berechnungsmitteln (UF1, UF2, ..., UFn), die jeweils mit einem bekannten Zielobjekt (Ti) assoziiert und mit den Ausgaben der Vergleichsmittel sowie der zweiten Speicherungsmittel verbunden sind, und die geeignet sind, die Verschmelzung der Ergebnisse des von den Vergleichsmitteln durchgeführten Vergleichs auszuführen, und zwar bekanntes Zielobjekt für bekanntes Zielobjekt, wobei die zweiten Werte berücksichtigt werden;
- eine Maximumvorrichtung (14), welche die Ausgaben der Berechnungsmittel (UF1 bis UFn) empfängt und an ihrer Ausgabe die Identität des zu identifizierenden Zielobjektes (T) liefert.

12. Vorrichtung gemäß Anspruch 11,
dadurch gekennzeichnet, daß die ersten Speicherungsmittel eine Vielzahl p an Speichern (M1 bis Mp) beinhalten, wobei jeder von ihnen für ein besonderes Kriterium Ck die Werte des besonderen Kriteriums Ck für alle bekannten Zielobjekte (Ti) enthält.

13. Vorrichtung gemäß einem der Ansprüche 11 oder 12,
dadurch gekennzeichnet, daß die zweiten Speicherungsmittel eine Vielzahl p an Matrixspeichern (MC1 bis MCp) beinhalten, wobei jeder von ihnen für ein besonderes Kriterium Ck die zweiten Werte PCk(Ti) für alle bekannten Zielobjekte (Ti) enthält.

14. Vorrichtung gemäß einem der Ansprüche 11 bis 13,
dadurch gekennzeichnet, daß die Vergleichsmittel (11) aus einer Vielzahl an individuellen Komparatoren (12k) bestehen, wobei jeder von ihnen einen Wert, der aus den Suchmitteln stammt, mit den ersten Werten vergleicht.

## Claims

1. Method for recognizing a target (T) from a plurality of n known targets Ti (with i = 1, 2, 3, ..., n), according to which in a first preparatory step, for each of the said known targets (Ti), first values (Cki) are determined which are representative of a plurality of p recognition criteria Ck (with k = 1, 2, 3, ..., p);
a method characterized in that:
- in a second preparatory step, at least n second values (PCk(Ti)) which are representative of the probabilities of recognizing a target (Ti) when it is examined are established by direct examination of the said n known targets (Ti), with the aid of the said first values (Cki) and for each recognition criterion (Ck); and
- in a step for recognizing said target:
· at least p third values (pCk (Ti)) which are representative of the probabilities that, for each recognition criterion (Ck), the target (T) to be recognized is each one of the said known targets (Ti) are established by direct examination of the said target (T) to be recognized and from the said first values (Cki) determined by the said first preparatory step;
· the said third values associated with any one known target (Ti) are fused together by taking into account the said second values, so as to obtain n fourth values (p(Ti)), each of which is representative of the probability that the target to be recognized is one of the known targets (Ti); and
· the identity of the target to be recognized (T) is determined from the largest of the said fourth values.

2. Method according to Claim 1, characterized in that the fusing of the said third values is achieved by implementing mathematical laws given by any one of the following theories: Bayes inference, maximum entropy, the theory of evidence or the theory of fuzzy sets.

3. Method according to one of Claims 1 or 2, characterized in that the said third values are certain values.

4. Method according to one of Claims 1 or 2, characterized in that the said third values are uncertain values.

5. Method according to any one of Claims 1 to 4, characterized in that:
- in the said second preparatory step, for each criterion Ck nxp second values PCk(Ti) are established each of which is representative of the probability that the target (Ti) is recognized, whilst it is the target (Tj) which is examined (with j = 1, 2, 3, ..., n);
- in the step for recognition:
· third values pCk(Ti) are established which are representative of the probabilities that the target (T) to be recognized is each one of the said n known targets (Ti) in relation to each of the said p criteria;
· the nxp third values associated with any one target (Ti) are fused together by taking into account the said nxp second values.

6. Method according to any one of Claims 1 to 5, characterized in that, in the said first preparatory step, the said first values are recorded criterion by criterion for all the said known targets (Ti), in such a way that all the said first values of all the said targets corresponding to a criterion are grouped together.

7. Method according to any one of Claims 1 to 6, characterized in that the determination of the said first values can be carried out by direct examination of the said known targets (Ti).

8. Method according to any one of Claims 1 to 6, characterized in that the determination of the said first values is carried out on the basis of mock-ups or of plans of the said known targets.

9. Method according to any one of Claims 1 to 8, characterized in that, in the said second preparatory step, the second said values are obtained by comparing the said first values with measurements of each of the said targets in accordance with each of the said criteria, the said measurements being repeated several times.

10. Method according to any one of Claims 1 to 9, characterized in that the said second values are advantageously recorded in matrix memories (MC1 to MCp), each matrix memory being associated with a criterion, and in each recording location (10.ji) of such a matrix memory being recorded the probability, for the said criterion, that the target (Ti) is recognized whilst the target (Tj) is subjected to direct examination.

11. Apparatus for implementing the method according to Claim 1, for recognizing a target (T) from a plurality of n known targets Ti (with i = 1, 2, 3, ..., n), comprising
- detection means (1, 2, 3, 4) capable of examining the said target (T) and of delivering at least one value for each of a plurality p of recognition criteria Ck (with k = 1, 2, ..., p);
- first memory means (M1, M2, ..., Mp) in which are recorded first values (Cki) representative, for each of the said known targets (Ti), of the said plurality of recognition criteria Ck;
- means of comparison (11) in which are compared the said values delivered by the said detection means and the said first recorded values;
an apparatus characterized in that it includes:
- second memory means (MC1, MC2, ..., MCp) in which are recorded second values PCk(Ti) representative of the probabilities that, for each criterion Ck, a known target (Ti) is recognized;
- a plurality of computing means (UF1, UF2, ..., Ufn) associated respectively with a known target (Ti) and linked to the outputs of the said means of comparison and of the said second memory means and capable of carrying out, known target by known target, the fusing of the results of the comparison made by the said means of comparison by taking into account the said second values;
- a maximum apparatus (14) receiving the outputs from the said computing means (UF1 to UFn) and delivering to its output the identity of the target (T) to be recognized.

12. Apparatus according to Claim 11, characterized in that the said first memory means include a plurality of p memories (M1 to Mp) each of which contains, for a particular criterion Ck, the values of the said particular criterion Ck for all the known targets (Ti).

13. Apparatus according to either one of Claims 11 and 12, characterized in that the said second memory means include a plurality of p matrix memories (MC1 to MCp) each of which contains, for a particular criterion Ck, the said second values PCk(Ti) for all the known targets (Ti).

14. Apparatus according to any one of Claims 11 to 13, characterized in that the said means of comparison (11) consist of a plurality of individual comparators (12k) each of which compares a value coming from the said detection means with one of the said first values.
